# DEMANDE DE BREVET EUROPEEN

(11) **EP 0 983 717 A1**
(43) Date de publication de la demande: **08.03.2000**
(21) Numéro de dépôt: 99402132.7
(22) Date de dépôt: 26.08.1999
(51) Int. Cl.: A01D 45/00, A23N 15/04

(54) **Système de convoyeurs pour végétaux**

(30) Priorité: 31.08.1998 FR 9811120
(71) Demandeur: Truffaux, Hubert, 80440 Boves (FR)
(72) Inventeur: Truffaux, Hubert, 80440 Boves (FR)
(74) Mandataire: Debay, Yves

(57) **Abrégé**

Système de convoyeurs pour végétaux caractérisé en ce qu'il comprend au moins une voie, chaque voie comprenant des moyens (230) de maintien de chaque tronc, tige ou racine (2) de végétaux (1) à tête convoyé, des moyens (210) de guidage de forme déterminée, constitués par une succession de droites et de courbes pouvant prendre n'importe quelle direction de l'espace tridimensionnel, et des moyens (220) coulissant dans les moyens (210) de guidage, ces moyens coulissants étant solidaires des moyens (230) de maintien, et ayant un mouvement de translation parallèle aux moyens (210) de guidage pour convoyer les végétaux (1) sur un parcours déterminé, la forme des moyens (210) de guidage étant sensiblement identique au tracé du parcours de convoyage des végétaux (1).

## Description

La présente invention concerne un système de convoyeurs pour végétaux à tête ou sans tête, des fleurs ou des aromates, tels que choux, brocolis, romanesco, choux-fleurs, choux pomme, choux de Bruxelles, choux rave, et d'une manière générale tout type de brasicca, poireaux, carottes, salades, asperges, artichauts, oignons, ciboulettes, piments, etc,. Une utilisation est d'intégrer ce système de convoyeurs à une machine agricole réalisant la cueillette des végétaux, ou de constituer une machine indépendante couplable à la machine agricole.

Il est connu par le brevet américain US 3,821,987, un appareil pour récolter les laitues utilisant des convoyeurs assurant le transport des laitues. La bande de certains convoyeurs est équipée de blocs de mousse. Le chemin parcouru par les laitues n'étant pas rectiligne, une pluralité de convoyeurs rectilignes est utilisée afin de réaliser le transport. Ceci entraîne nécessairement une discontinuité dans le maintien des laitues ou des vitesses des convoyeurs, notamment lors des changements de direction et donc un risque de chute ou de chocs endommageant les laitues. De plus, le système de convoyeurs enseigné par le document US 3,821,987 est inscrit uniquement dans un plan et assure le convoyage des laitues par l'intermédiaire de leur tête.

Il est également connu par le brevet américain US 3,690,049 une machine pour récolter les brocolis. Cette machine comprend un convoyeur comprenant deux bandes disposées face à face. Chaque bande est munie d'une pluralité de doigts. Lors du mouvement des bandes, les doigts s'intercalent pour enserrer et maintenir le pied du brocoli pendant son transport et son traitement. Bien que le maintien des brocolis soit satisfaisant, il n'est pas possible d'envisager un parcours autre que rectiligne pour le transport et le traitement des brocolis.

La présente invention a donc pour objet de pallier les inconvénients de l'art antérieur en proposant un système de convoyeurs pouvant suivre un parcours tridimensionnel sans risque de chute des végétaux.

Ce but est atteint par le fait que le système de convoyeurs comprend au moins une voie, chaque voie comprenant des moyens de maintien de chaque tronc, tige ou racine de végétaux convoyés, des moyens de guidage de forme déterminée, constitués par une succession de droites et de courbes pouvant prendre n'importe quelle direction de l'espace tridimensionnel, et des moyens coulissant dans les moyens de guidage, ces moyens coulissants étant solidaires des moyens de maintien, et ayant un mouvement de translation parallèle aux moyens de guidage pour convoyer les végétaux sur un parcours déterminé, la forme des moyens de guidage étant sensiblement identique au tracé du parcours de convoyage des végétaux.

Selon une autre particularité, les moyens de maintien comprennent une pluralité de plaques montées sur les moyens coulissants par l'intermédiaire d'une patte, de sorte que chaque plaque soit sensiblement parallèle aux troncs, tiges ou racines des végétaux convoyés et qu'il subsiste un intervalle déterminé entre chaque plaque, chaque plaque comprenant également des moyens assurant le positionnement des troncs, tiges ou racines de végétaux.

Selon une autre particularité, les moyens de guidage sont formés, d'une part par un premier profilé de matériau déterminé comprenant une rainure dont la section transversale est conformée pour recevoir les moyens coulissants, et d'autre part, soit par une plaque parallèle et en vis-à-vis du premier profilé, soit par un deuxième profilé identique au premier mais parallèle et avec la rainure en vis-à-vis de celle du premier.

Selon une autre particularité, les moyens coulissants sont constitués d'une chaîne dont chaque maillon forme un angle variable déterminé par le profilé de guidage avec le maillon précédent.

Selon une autre particularité, l'angle formé par un maillon de la chaîne et le maillon précédent est sensiblement égal à 90° en ligne droite.

Selon une autre particularité, les moyens de positionnement des troncs, tiges ou racines de végétaux comprennent au moins un bloc de matériau semi-rigide par rapport à la rigidité du végétal et monté sur la plaque, les dimensions de chaque bloc étant choisies pour que la surface extérieure des blocs, opposée à la plaque, soit toujours en contact avec les troncs, tiges ou racines de végétaux pendant le mouvement des moyens coulissants.

Selon une autre particularité, le matériau choisi pour réaliser chaque profilé constituant les moyens de guidage et/ou les moyens coulissants est un matériau dont la surface extérieure possède un faible coefficient de frottement et est préférentiellement du Téflon.

D'autres particularités et avantages de la présente invention apparaîtront plus clairement à la lecture de la description ci-après faite en référence aux dessins annexés dans lesquels :
- la figure 1 représente une vue de dessus et simplifiée d'un convoyeur selon l'invention comprenant une pluralité de voies.
- la figure 2 représente une vue en perspective de la portion AA du système de convoyeurs de la figure 1.
- la figure 3 représente une coupe longitudinale des moyens de guidage.
- la figure 4 représente une vue de face des moyens coulissants et des moyens de maintien.
- la figure 5 représente une vue de détail et en perspective du montage des moyens de maintien sur les moyens coulissants.

Dans la suite de la description, le terme « végétal » désigne l'ensemble des végétaux énumérés au début de la description et le terme « tronc » désigne non seulement le tronc des végétaux mais aussi la tige ou la ou les racines ou toute autre partie du végétal susceptible d'être utilisée pour le maintien du végétal pendant son transport.

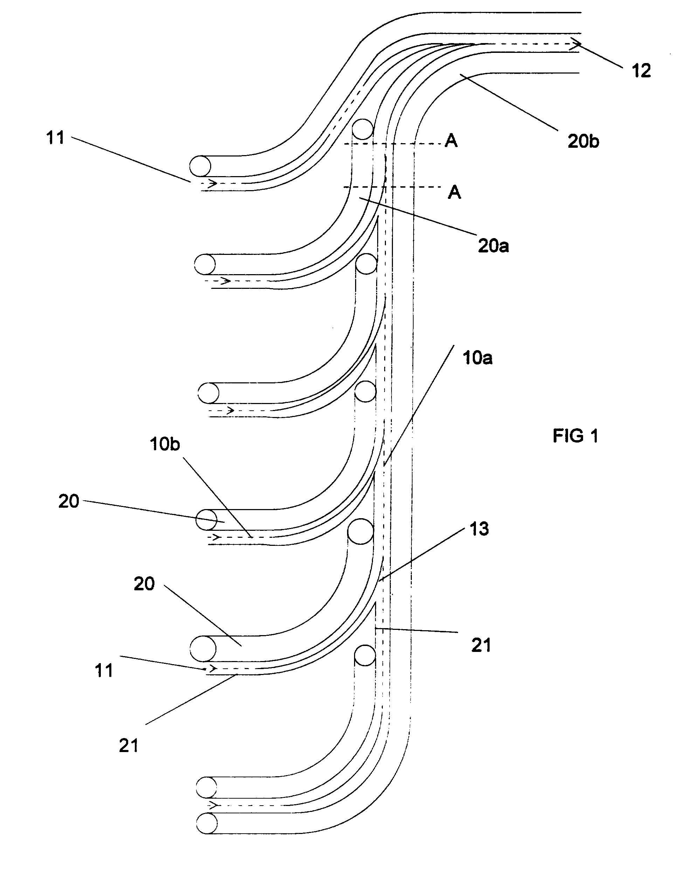

La figure 1 représente une vue de dessus et simplifiée d'un système de convoyeurs selon l'invention comprenant une pluralité de voies. Le système de convoyeurs représenté figure 1 comprend une pluralité d'entrées (11), et par exemple, une seule sortie (12) vers, par exemple, un poste de traitement (non représenté) et/ou une zone de stockage (non représentée) des végétaux. Le poste de traitement comprend, par exemple, un poste de découpe comprenant des moyens de découpe du tronc ou des parties souhaitées des végétaux, tels que des couteaux, des ciseaux, scies ou tout autre moyen. Ces moyens de découpe sont positionnés, soit au-dessus du convoyeur selon l'invention, soit en-dessous. Entre les entrées (11) et la sortie (12), les végétaux sont guidés sur un parcours (10). Ce parcours (10) est formé par une succession de lignes droites et de courbes pouvant prendre n'importe quelle direction de l'espace. Ainsi, le parcours (10) peut s'inscrire, soit sur une droite, soit sur un plan, soit dans un volume. Le système de convoyeurs de la figure 1 comprend une pluralité de convoyeurs (20, 20a, 20b) selon l'invention, dont un convoyeur (20b) principal et au moins un convoyeur (20, 20a) secondaire relié au convoyeur (20b) principal par une intersection (13). Les végétaux entrant dans le système de convoyeurs par une entrée (11) sont ensuite guidés sur le parcours (10) soit par deux convoyeurs (20a, 20b) selon l'invention, soit par un convoyeur (20) selon l'invention et une plaque (21) parallèle située en vis-à-vis du convoyeur (20). Avantageusement, la largeur du parcours (10) suivi par les végétaux, c'est-à-dire la distance entre soit les deux convoyeurs (20a, 20b) situés de part et d'autre du parcours, soit un convoyeur (20) et une plaque (21), correspond sensiblement au diamètre des troncs de végétaux, qui est de l'ordre de 40 mm, lorsque les végétaux à tête sont des choux.

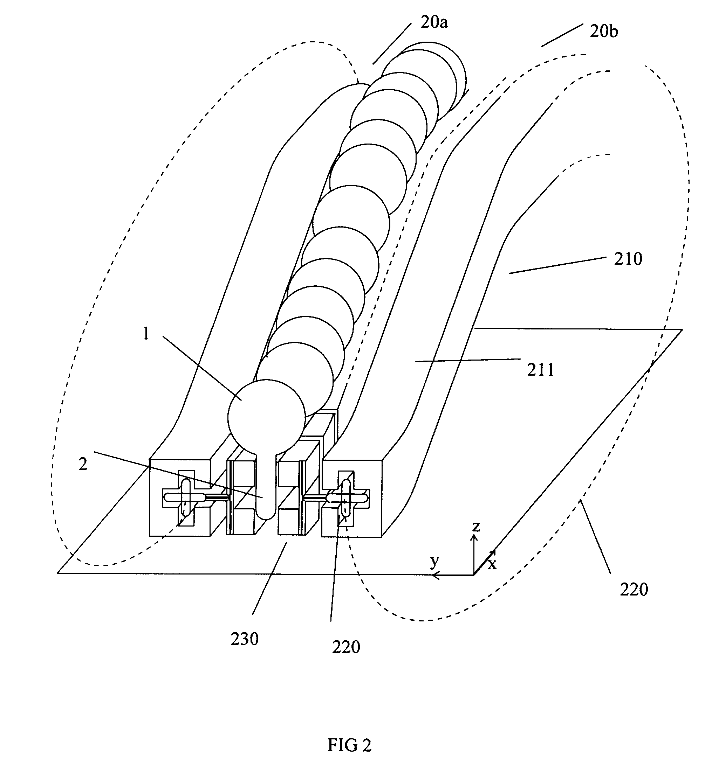

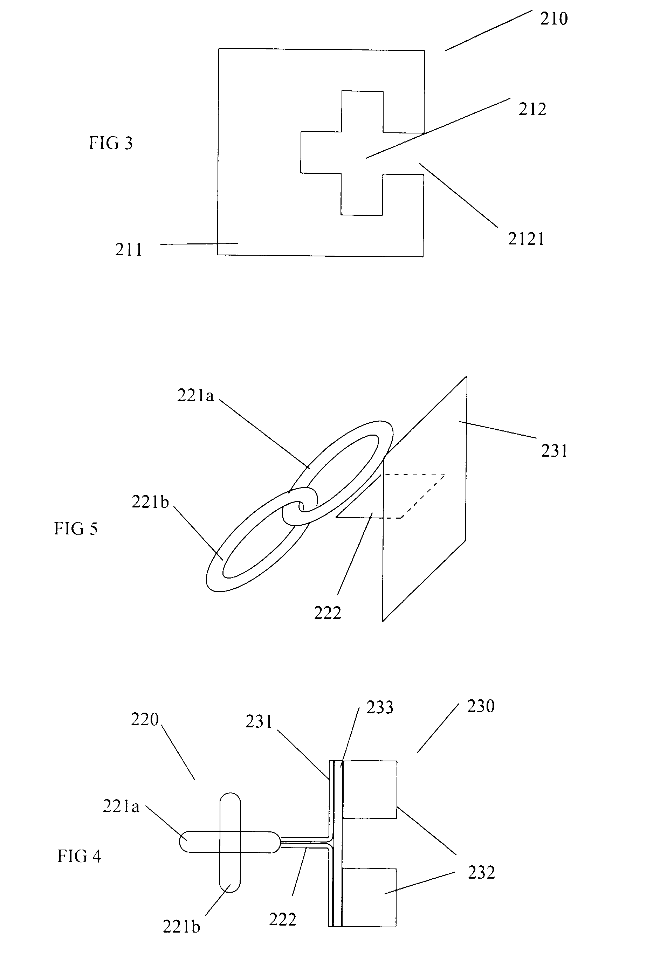

Le convoyeur selon l'invention va à présent être décrit en référence aux figures 2 à 4. La portion AA (représentée figure 2) du système de convoyeurs de la figure 1, est formée par deux convoyeurs (20a, 20b). Chaque convoyeur comprend des moyens de guidage (210), des moyens (220) coulissant dans les moyens (210) de guidage, et des moyens (230) de maintien solidaires des moyens (220) coulissants. Les moyens (210) de guidage comprennent un profilé (211, fig. 2 et 3) monobloc de forme déterminée, dans lequel est pratiquée une rainure (212, fig.3) dont la section transversale correspond sensiblement à la forme de la section transversale des moyens (220) coulissants. La forme de chaque profilé (211) est identique au parcours (10, fig. 1) souhaité pour transporter les végétaux. En d'autres termes, le profilé (210) est formé par une succession de droites et de courbes pouvant prendre n'importe quelle direction de l'espace tridimensionnel défini par le repère (x, y, z) de la figure 2. De cette façon, le trajet de transport des végétaux peut former une vrille ou suivre un trajet hélicoïdal. Sur la figure 1, le parcours suivi par la portion AA (représentée figure 2) est situé dans un plan perpendiculaire au repère (x, y, z). Toutefois il est à la portée de l'homme de métier de concevoir une portion (non représentée) située dans le prolongement de la portion AA et orientée selon n'importe quelle direction dans un plan, par exemple, parallèle au plan contenant le repère (x, y, z).

Les moyens (220) coulissants dans la rainure (212) du profilé (211) sont, par exemple, constitués d'une chaîne (220) marine formant une boucle. Cette chaîne (220) est formée par une succession de maillons (221) de dimensions déterminées, de sorte que chaque maillon (221a) s'articule selon toutes les directions avec le suivant ou le précédent par les courbes du profilé de guidage formant un angle variable déterminé avec le maillon (221b) qui le précède ou le suit. Avantageusement, les plans contenant un maillon forme un angle sensiblement égal à 90° avec le maillon précédent ou suivant lorsqu'ils suivent un profilé de guidage rectiligne. Lorsque la chaîne (220) est insérée dans la rainure (212) en forme de croix du profilé (210), un maillon (221a) sur deux est accessible de l'extérieur du profilé (210) par l'ouverture (2121) de la rainure (212) du profilé.

Le mouvement de translation de la chaîne (220) dans la rainure (212) du profilé (211) est assuré, par exemple, par un système de poulies entraînées en rotation par tous types de moteurs (thermique, électrique,...).

Le matériau choisi pour réaliser le profilé (211) et/ou la chaîne (220) est un matériau dont la surface possède un faible coefficient de frottement tel que, par exemple, du Téflon. La chaîne peut être en métal et le guide peut être recouvert de Téflon.

Les moyens (230) de maintien sont solidaires des moyens (220) coulissants. Les végétaux (1), lors de leur convoyage, sont maintenus par leur tronc (2) entre les moyens (230) de maintien de deux chaînes (220) ou d'une chaîne (220) et d'une plaque (21, fig. 1). Dans le cas où les moyens (220) coulissants sont constitués d'une chaîne, la solidarisation des moyens (230) de maintien est réalisée par l'intermédiaire d'une pluralité de pattes (222). Chaque patte (222) est fixée, d'une part au maillon (221a) accessible de la chaîne et d'autre part, à une plaque (231) des moyens (230) de maintien. Les moyens (230) de maintien comprennent une pluralité de plaques (231) de dimensions déterminées. Chaque plaque (231) est fixée à une patte (222) solidaire de la chaîne (220). Chaque plaque (231) comprend également au moins un bloc (232) de matériau semi-rigide par rapport à la rigidité du végétal, souple du type mousse de matière synthétique telle que de la mousse de polyuréthanne. Les blocs (232) semi-rigides peuvent être réalisés en tous matériaux synthétiques ou alvéolaires ou non tels que des brosses ou tissus bouclés. Chaque bloc (232) de mousse est fixé sur la plaque (231) par l'intermédiaire d'un textile (233) recouvrant la surface de la plaque (231) destinée à recevoir les blocs (232) de mousse. Les dimensions des blocs (232) de mousse sont déterminées pour que ceux-ci ne dépassent pas les limites de la surface définie par la plaque et pour que la surface des blocs (232) opposée à la surface de la plaque (231) soit toujours en contact avec le tronc (2) des végétaux (1) lors de leur transport le long du parcours de convoyage. L'utilisation de blocs (232) de matériau semi-rigide permet le convoyage de végétaux (1) dont les troncs (2) n'ont pas des dimensions homogènes. En effet, lorsque la dimension des troncs (2) est supérieure à la normale, les blocs (232) de mousse vont se déformer pour enserrer le tronc (1).

De manière avantageuse, la longueur des maillons (221) de la chaîne (220) est inférieure à la longueur de chaque plaque (231). La longueur de chaque plaque (231) est choisie pour que deux plaques consécutives soient distantes d'un intervalle inférieur à la dimension du tronc ne permettant pas le passage d'un tronc (2) de végétal (1), même dans les configurations les plus défavorables, c'est-à-dire dans les courbes où la pluralité de plaques (231) est située à l'extérieur de la trajectoire. La hauteur de chaque plaque (231) est déterminée pour assurer un maintien optimal du tronc (2) du végétal (2). L'épaisseur des blocs (232) de matériau semi-rigide est choisie pour que la largeur du parcours emprunté par les troncs (2) de végétaux (1) soit de l'ordre de 40 mm.

A titre d'exemple, pour un diamètre de tronc (2) de l'ordre de 40 mm, les maillons (221) de la chaîne ont une épaisseur de l'ordre de 2 mm, une longueur de l'ordre de 20 mm, la hauteur de la plaque est de l'ordre de 40 mm, et sa largeur est de l'ordre de 28mm. Ces dimensions permettent d'obtenir un intervalle entre chaque plaque (231) de l'ordre de 4 mm et donc de parvenir à une continuité dans le convoyage de végétaux (2).

Le fonctionnement d'un système de convoyeurs selon l'invention est le suivant : dès l'entrée (10) dans le système de convoyeurs selon l'invention, le tronc (2) des végétaux (1) est maintenu, soit entre les blocs (232) de mousse d'un premier et d'un deuxième convoyeurs (20) selon l'invention, soit entre les blocs (232) de mousse d'un convoyeur selon l'invention et une plaque (21) parallèle en vis-à-vis du convoyeur. Le mouvement de la chaîne (220) dans la rainure (212) du profilé (211) entraîne le mouvement des troncs (2) de végétaux (1) le long du parcours (10), les troncs (2) restant maintenus par les blocs (232) de mousse. Lorsque le parcours (10) comprend une intersection (13), c'est-à-dire quand au moins deux portions de parcours (10a, 10b) fusionnent en une seule, les végétaux (1) de chaque portion en amont de l'intersection (13) sont entraînés entre le convoyeur principal (20b) et la plaque (21) de l'intersection (13) et poussés éventuellement par les végétaux arrivant en amont par le chemin principal (10a). Puis ils se mélangent avec les végétaux arrivant à une autre intersection en provenance d'un autre convoyeur (20) secondaire pour être entraînés, en conservant une continuité dans le convoyage, sur la portion de parcours (10) située en aval. Chaque convoyeur (20, 20a) secondaire possède une portion de parcours (10a, 10b) commune avec le convoyeur principal (20b) qui adopte toute la forme et le tracé du parcours de convoyage.

Ainsi, quelle que soit la configuration du parcours (10) dans l'espace, et quel que soit le nombre d'entrées (11), le système de convoyeurs selon l'invention permet un transport des végétaux (1) à tête par l'intermédiaire de tronc (2). Le maintien des troncs (2) et non de la tête des végétaux permet de conserver intacte la tête des végétaux (1).

Il est clair que d'autres modifications à la portée de l'homme du métier entrent dans le cadre de l'invention

## Revendications

1. Système de convoyeurs pour végétaux caractérisé en ce qu'il comprend au moins une voie, chaque voie comprenant des moyens (230) de maintien de chaque tronc, tige ou racine (2) de végétaux (1) à tête convoyé, des moyens (210) de guidage de forme déterminée, constitués par une succession de droites et de courbes pouvant prendre n'importe quelle direction de l'espace tridimensionnel, et des moyens (220) coulissant dans les moyens (210) de guidage, ces moyens coulissants étant solidaires des moyens (230) de maintien, et ayant un mouvement de translation parallèle aux moyens (210) de guidage pour convoyer les végétaux (1) sur un parcours déterminé, la forme des moyens (210) de guidage étant sensiblement identique au tracé du parcours de convoyage des végétaux (1).

2. Système de convoyeurs pour végétaux selon la revendication 1, caractérisé en ce que les moyens (230) de maintien comprennent une pluralité de plaques (231) montées sur les moyens (220) coulissants par l'intermédiaire d'une patte (222), de sorte que chaque plaque (231) soit sensiblement parallèle aux troncs, tiges ou racines (2) des végétaux (1) convoyés et qu'il subsiste un intervalle déterminé entre chaque plaque (231), chaque plaque (231) comprenant également des moyens (232, 233) assurant le positionnement des troncs, tiges ou racines (2) de végétaux (1).

3. Système de convoyeurs pour végétaux selon la revendication 1 ou 2, caractérisé en ce que les moyens (210) de guidage sont formés, d'une part par un premier profilé (210) de matériau déterminé comprenant une rainure (212) dont la section transversale est conformée pour recevoir les moyens (220) coulissants, et d'autre part, soit par une plaque (21) parallèle en vis-à-vis du premier profilé (210), soit par un deuxième profilé (210) identique au premier mais parallèle et avec la rainure (212) en vis-à-vis de celle du premier.

4. Système de convoyeurs pour végétaux selon l'une des revendications 1 à 3, caractérisé en ce que les moyens (220) coulissants sont constitués d'une chaîne (220) dont chaque maillon (221a) forme un angle variable déterminé par le profil de guidage avec le maillon (221b) précédent.

5. Système de convoyeurs pour végétaux selon la revendication 4, caractérisé en ce que l'angle formé par un maillon (221a) de la chaîne (220) et le maillon (221b) précédent est sensiblement égal à 90° en ligne droite.

6. Système de convoyeurs pour végétaux selon la revendication 5, caractérisé en ce que les moyens (232, 233) de positionnement des troncs tiges ou racines (2) de végétaux (1) comprennent au moins un bloc (232) de matériau semi-rigide par rapport à la rigidité du végétal et monté sur la plaque, les dimensions de chaque bloc (232) étant choisies pour que la surface extérieure des blocs (232), opposée à la plaque (231), soit toujours en contact avec les troncs, les tiges ou les racines (2) de végétaux (1) pendant le mouvement des moyens (220) coulissants.

7. Système de convoyeurs pour végétaux selon l'une des revendications 4 à 6 prise en combinaison avec la revendication 3, caractérisé en ce que le matériau choisi pour réaliser chaque profilé (211) constituant les moyens (210) de guidage et/ou les moyens (220) coulissants est un matériau dont la surface extérieure possède un faible coefficient de frottement et est préférentiellement du Téflon.
